# FASCICULE DE BREVET EUROPEEN

(11) **EP 1 580 419 B1**
(45) Date de publication et mention de la délivrance du brevet: **25.04.2007**
(21) Numéro de dépôt: 05300221.8
(22) Date de dépôt: 24.03.2005
(51) Int. Cl.: F02K 1/48

(54) **Tuyère primaire à chevrons pour turboréacteur à double flux d'aéronef et aéronef comportant une telle tuyère**
Gezackte Kerndüse für das Zweikreis-Turbostrahltriebwerk eines Flugzeugs und Flugzeug mit einer solchen Düse
Primary nozzle with chevrons for bypass turboreactor engine of an aircraft and aircraft with such a nozzle

(30) Priorité: 25.03.2004 FR 0450586
(43) Date de publication de la demande: 28.09.2005
(73) Titulaire: AIRBUS France, 31060 Toulouse (FR)
(72) Inventeur: Feuillard, Philippe, 31290, Gardouch (FR); Hemeury, Philippe, 31700, BLAGNAC (FR); Gerri, Christian, 31470, Fonsorbes (FR)
(74) Mandataire: Camus, Olivier Jean-Claude

(56) Documents cités:
- US-A1- 2001 035 004
- US-B1- 6 360 528

## Description

### Domaine de l'invention

L'invention concerne une tuyère primaire à chevrons pour turboréacteur à double flux d'aéronef. La tuyère de l'invention, du type à double peau, comporte un système de chevrons réversible, destiné à atténuer le bruit en phase de décollage de l'aéronef.

L'invention trouve des applications dans le domaine de l'aéronautique et, en particulier, dans le domaine de la réduction des nuisances sonores extérieures produites par les turboréacteurs d'un aéronef notamment lors de la phase de décollage.

### Etat de la technique

En aéronautique, il est connu que le bruit produit par un aéronef, tel qu'un avion, est particulièrement désagréable et difficile à supporter pour les riverains d'un aéroport, c'est-à-dire pour les personnes habitant dans des logements situés à proximité d'un aéroport. Ce bruit est particulièrement intense dans les phases de décollage des avions. Aussi, depuis de nombreuses années, les constructeurs d'avions cherchent à atténuer au maximum le bruit produit par les avions, en particulier lors des phases de décollage.

D'une façon générale, le bruit provoqué par un turboréacteur d'avion, notamment à haut régime est généré par la vitesse d'éjection des gaz brûlés en sortie d'échappement. D'un point de vue installation, le turboréacteur à double flux est logé dans une nacelle équipée, dans sa partie arrière, de systèmes d'échappement primaire et secondaire. Le conduit primaire, correspondant au système d'échappement primaire, comporte une tuyère primaire dont le but est d'amener à l'air libre un flux d'air chaud, à énergie de vitesse constante. Le conduit secondaire, correspondant au système d'échappement secondaire, est défini par le volume compris entre la partie externe de la tuyère primaire et la partie interne de l'inverseur de poussée. Les systèmes d'échappement d'air, au global, ont pour fonction de transformer l'énergie de pression des gaz en énergie de vitesse et donc en poussée. Or, la vitesse de l'air en sortie de tuyère primaire provoque un bruit de jet d'autant plus important que le régime moteur est élevé. Comme un avion a sa poussée maximum au décollage, on comprend que le bruit de jet provoqué par ses moteurs est maximum au moment du décollage. Une fois que l'avion est en phase de croisière, le bruit provoqué par les moteurs a une moindre importance du fait de l'éloignement de l'avion par rapport aux habitations, et en particulier de fait de l'altitude élevée de l'avion.

Actuellement, pour atténuer le bruit de jet des turboréacteurs à double flux d'un avion pendant la phase de décollage, il est connu de monter des tuyères primaires à chevrons fixes sur les avions. Une tuyère à chevrons est une tuyère dont l'extrémité externe, c'est-à-dire l'extrémité formant le bord de fuite de la tuyère, a une forme non lisse, formant des « zigzags ». Ces zigzags peuvent être constitués par une succession de V. Les brevets US 2001/0035004 et US 6360528 documentent l'état de l'art antérieur. Une tuyère à chevrons peut être une tuyère à double peau, c'est-à-dire comportant une peau interne traversée par le flux d'air chaud (flux primaire) et une peau externe en contact avec le flux d'air froid (flux secondaire). Une telle tuyère à chevrons a pour effet de mieux homogénéiser les flux primaire et secondaire et de réduire les nuisances sonores engendrées par l'air à grande vitesse du flux primaire.

Cependant, une tuyère à chevrons a une influence négative sur la performance du moteur. En effet, l'optimisation acoustique nuit à l'efficacité en performance pure de la tuyère. A poussée égale, un turboréacteur comportant des tuyères à chevrons consomme une quantité sensiblement plus importante de carburant qu'un turboréacteur à tuyères lisses. En effet, des turbulences sont alors générées, ce qui induit des pertes de charges et, par conséquent, une plus grande consommation de carburant. Sur des avions de petite taille, assurant des croisières de courte durée, l'effet de l'augmentation de cette consommation spécifique est peu importante (de l'ordre de 0,1 %) puisque la phase de croisière est courte. Par contre, sur des avions de grande taille assurant des vols longs courriers, la consommation en carburant, qui à la base est sensiblement plus forte que sur un avion de taille plus modeste, augmente de façon significative. On comprend, en effet, que plus la durée du vol est longue, plus l'augmentation de la consommation en carburant est sensible, ce qui a un effet économique notoire.

Par ailleurs, à basse vitesse, la présence de tuyères à chevrons augmente la poussée de l'avion alors qu'à haute la poussée, pour un régime moteur donnée, est négativement affectée. En conséquence, pour ne pas modifier les performances de l'avion, il est possible d'associer un ajustement de poussée asservi sur la vitesse de l'avion. Or, la définition d'un tel ajustement est complexe et peut s'avérer coûteuse. De plus, un système de surveillance doit être mis en oeuvre pour s'assurer de la bonne configuration de la tuyère.

### Exposé de l'invention

L'invention a justement pour but de remédier aux inconvénients des techniques exposées précédemment, en prenant en compte le fait que l'effet des chevrons sur la performance du turboréacteur est notable pour tout le vol et que l'intérêt acoustique de ces chevrons se manifeste près du sol. A cette fin, l'invention propose une tuyère du type à double peau, dont une des peaux est équipée de chevrons rendus réversibles par le recouvrement de l'autre peau. Pour cela, la peau externe de la tuyère est mobile le long de la peau interne, offrant à la tuyère une configuration avec chevrons et une configuration avec peau lisse. Ainsi, l'invention propose d'utiliser les avantages d'une tuyère à chevrons, lorsque l'avion est à basse altitude à régime moteur élevé, et d'utiliser les avantages d'une tuyère à peau lisse, c'est-à-dire sans chevron pour toutes les autres phases de vol. De cette façon, le bruit extérieur est réduit lors de la phase de décollage de l'avion mais il n'y a pas d'impact sur les performances de l'avion pendant le reste du vol.

De façon plus précise l'invention concerne une primaire de turboréacteur pour aéronef de type à double flux d'air séparé, comportant :
- une peau interne à l'intérieur de laquelle circule un flux d'air primaire et qui comporte, à une extrémité externe, des chevrons,
- une peau externe entourant au moins partiellement la peau interne en contact avec le flux secondaire.

Cette tuyère se caractérise par le fait que la peau externe est mobile le long de la peau interne.

Dans un mode de réalisation préféré de l'invention, la tuyère comporte un dispositif de coulissement entre la peau interne et la peau externe.

L'invention peut également comporter une ou plusieurs des caractéristiques suivantes :
- le dispositif de coulissement est entraîné par au moins un vérin,
- le dispositif de coulissement comporte des rails de guidage,
- le dispositif de coulissement comporte des galets de guidage,
- le vérin est commandé par air,
- les chevrons de la peau interne ont une forme en « zigzags »,
- les zigzags sont constitués par une succession de découpes en trapèze ou en U.

L'invention concerne aussi un aéronef comportant turboréacteur à double flux caractérisé par le fait que ledit turboréacteur comporte une tuyère telle que décrite précédemment.

### Brève description des dessins

La figure 1 représente une vue en coupe schématique d'une tuyère selon l'invention, dans sa configuration avec chevrons.
La figure 2 représente une vue en coupe schématique d'une tuyère selon l'invention, dans sa configuration peau lisse.
La figure 3 représente différents motifs de chevrons réalisables sur la tuyère de l'invention.

### Description détaillée des modes de réalisation de l'invention

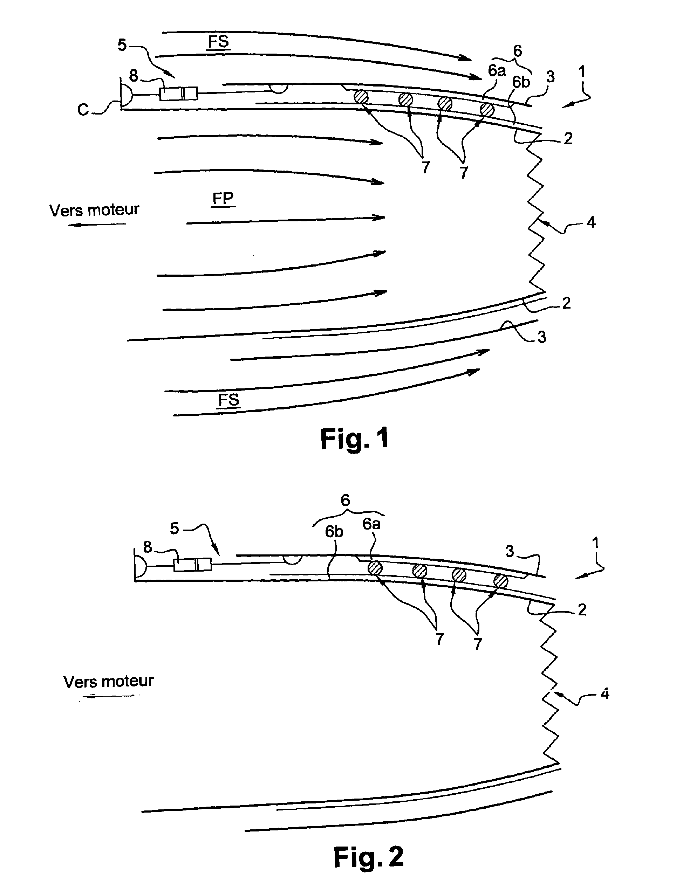

Un exemple d'une tuyère à chevrons selon l'invention est représenté sur la figure 1. Cette tuyère 1 comporte une interne 2 et une peau externe 3. La peau interne 2 est en contact avec le flux d'air chaud issu du turboréacteur et appelé flux primaire FP. La peau externe 3, qui entoure au moins en partie la peau interne 2, est en contact avec le flux d'air froid ambiant, appelé flux secondaire FS. La peau interne 2 et la peau externe 3 sont concentriques l'une par rapport à l'autre. Cette tuyère à double peau est réalisée dans deux matériaux différents. La peau interne 2 est réalisée dans un à caractéristiques mécaniques élevées à températures élevées, comme par exemple, l'Inconel. Ces matériaux à bonne caractéristique thermique présentent généralement l'inconvénient d'être lourds. La peau externe 3, située côté froid de la tuyère, est réalisée dans un matériau à bonne résistance mécanique pour supporter les efforts subis par la tuyère. Le matériau de la peau externe est choisi le plus léger possible afin d'optimiser le devis masse de l'ensemble. Ce matériau peut être du titane. L'un des avantages d'une tuyère à double peau est de permettre l'optimisation aérodynamique des flux chaud et froid.

Comme montré sur la figure 1, la tuyère 1 de l'invention comporte des chevrons 4. Ces chevrons sont insérés à l'extrémité externe de la peau interne 2, c'est-à-dire sur le bord de la tuyère situé à l'extrémité arrière du turboréacteur. Les chevrons de la peau interne ont une forme optimisée en fonction du cycle du turboréacteur et des niveaux d'atténuation visés En d'autres termes, le bord externe de la peau interne 2 comporte, par exemple, des chevrons 4 formant une surface en zigzags.

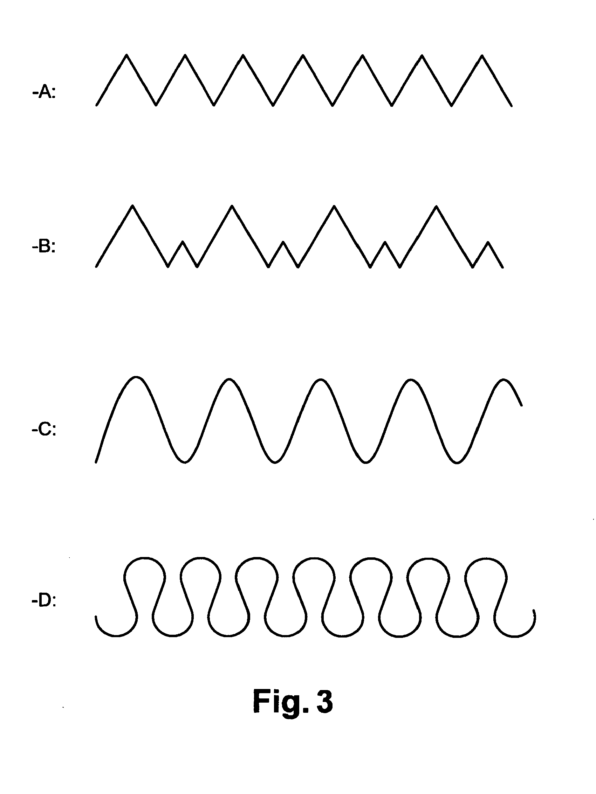

Selon l'invention, ces zigzags peuvent être constitués par une succession de trapèzes, par exemple de V, comme dans l'exemple de la figure 1. Ces zigzags peuvent prendre d'autres formes que celle de la figure 1. Des exemples de différentes formes de chevrons sont représentés sur la figure 3. L'exemple A de la figure 3 montre des zigzags en V, comme expliqué précédemment. L'exemple B de la figure 3 montre des zigzags constitués par une succession de V de tailles différentes, formant des dents de scie. L'exemple C de la figure 3 montre des zigzags formés par une succession de U. L'exemple D de la figure 3 montre des zigzags en forme des pétales de fleurs. D'autres formes de chevrons peuvent également être utilisées dans la tuyère de l'invention, la forme choisie pour les chevrons dépendant du type de moteur considéré et des résultats d'études et d'essais en soufflerie.

Le nombre de chevrons, dans l'invention, peut aussi être optimisé en fonction du cycle du turboréacteur et des niveaux d'atténuation visés.

Dans l'exemple de la figure 1, la peau externe 3 est installée autour de la peau interne 2 de façon à être mobile le long de ladite peau interne 2. Cette mobilité est obtenue par un dispositif de coulissement 5. Selon un mode de réalisation de l'invention, ce dispositif de coulissement 5 comporte des moyens de guidage 6, 7 et au moins un vérin d'actionnement 8. Les moyens de guidage comportent des rails de guidage 6. Ces rails de guidage peuvent être simples, c'est-à-dire qu'ils glissent l'un dans l'autre. Un des rails 6b est fixé sur la paroi extérieure de la peau interne 2 et l'autre rail 6a est fixé sur la paroi intérieure de la peau externe 3. Dans l'exemple de la figure 1, les moyens de guidage comportent également des galets 7 montés entre les rails 6a et 6b. Ces galets assurent un meilleur coulissement de la peau externe le long de la peau interne, par roulement des galets 7 entre les rails 6a et 6b. Dans l'invention, la taille des galets peut conditionner la distance entre la peau interne et la peau externe, constituant ainsi un paramètre d'optimisation.

Il est à noter qu'en vol, les chevrons sont sollicités en mouvement soit par les vibrations du turboréacteur soit par des effets dits de flutter. Ces sollicitations sont source de fatigue car elles engendrent des efforts significatifs dans les creux des chevrons. La peau externe 3, en venant coulisser sur les chevrons 4, empêchent ces mouvements parasites.

Sur la figure 1, un seul ensemble de rails et galets est représenté, étant entendu que plusieurs de ces ensembles peuvent être répartis sur la circonférence de la tuyère.

Le coulissement de la peau externe 3 est actionné par au moins un vérin 8 placé en amont de la tuyère. Ce vérin est fixé d'une part sur la peau externe 3 et d'autre part sur le carter C du turboréacteur. Ce vérin peut être commandé selon des techniques de commande connues, par exemple, de façon électrique ou hydraulique. Dans un mode de réalisation préféré, il est commandé par flux d'air, l'air pouvant être prélevé sur un compresseur haute pression du moteur.

Dans l'exemple de la figure 1, un seul vérin 8 est représenté. Il est entendu que plusieurs vérins de ce type peuvent être répartis sur le pourtour de la tuyère, par exemple deux placés symétriquement l'un à l'autre.

Sur la figure 1, la tuyère de l'invention est montrée dans sa configuration à chevrons. Autrement dit, la tuyère est représentée dans la position de décollage de l'avion. Dans cette position, la peau externe est coulissée en avant, c'est-à-dire vers l'entrée du moteur. Les chevrons sont proéminents par rapport à la peau externe. Ils peuvent alors pleinement jouer leur rôle d'atténuateur acoustique.

Le dispositif de coulissement 5 de l'invention permet aussi de translater la peau externe 3 parallèlement à la peau interne 2 vers la sortie du moteur, c'est-à-dire vers l'arrière de l'avion de façon à occulter les chevrons 4. L'extrémité arrière de la peau externe 3 (c'est-à-dire l'extrémité dirigée vers l'arrière de l'avion) se trouve alors alignée avec la partie arrière des chevrons installés sur la peau interne 2. La tuyère est alors dans une configuration à peau lisse. Cette configuration est représentée sur la figure 2.

Dans cette configuration, le flux d'air sortant de la tuyère primaire ne subit que de façon très marginale les effets des chevrons, dans le flux primaire. De plus, le flux secondaire, dans cette configuration, ne subit aucun effet aérodynamique négatif. Il est donc intéressant que le flux secondaire soit soumis à une configuration à peau lisse.

La configuration représentée sur la figure 2 est donc la configuration adoptée par l'avion après son décollage, donc, pour toutes les autres phases de vol.

On comprend, à la lecture de ce qui précède, que le coulissement de la peau externe par rapport à la peau interne est effectué deux fois pendant un vol :
- le premier coulissement est effectué avant le décollage de l'avion, et
- le second coulissement est effectué en vol, lorsque la nuisance sonore ne représente plus un paramètre majeur.

Ainsi, le premier coulissement (configuration avec chevrons) s'opère avant le décollage, lors de la mise en poussée de décollage du turboréacteur. Cette fonction peut être asservie en fonction de la position de la manette des gaz ainsi que par rapport au régime moteur.

Le second coulissement met la tuyère en configuration à peau lisse. Cette configuration est établie lorsque l'avion est suffisamment éloigné des zones sensibles au bruit, ce qui correspond à une certaine altitude. Le critère de passage en configuration à peau lisse peut donc être l'altitude atteinte par l'avion. Ce peut être aussi la poussée atteinte par l'avion. Cette poussée peut être détectée en fonction d'une position de la manette de vol ou bien en fonction du paramètre N1, qui est l'un des paramètres donnant la poussée FN de l'avion. L'asservissement permettant le passage dans cette configuration peut être défini en fonction d'un seul critère ou de plusieurs de ces critères (position manette, niveau de N1, altitude). D'autres paramètres peuvent être utilisés afin, notamment, de prendre en compte des cas de panne.

Dans une variante de l'invention, une position de sécurité (configuration en peau lisse) peut être définie sans influence sur les performances de l'avion. De même, un système de surveillance de la position de la tuyère peut être aisément intégrable (par capteurs de position, par exemple).

La tuyère de l'invention présente, en plus des avantages cités précédemment, celui de pouvoir être adaptée sur des moteurs existants, y compris sur des moteurs déjà pourvus de tuyère à chevrons fixes. La forme des chevrons est alors choisie en fonction du moteur.

## Revendications

1. - Tuyère (1) de turboréacteur pour aéronef de type à double flux d'air séparés, comportant :
- une peau interne (2) à l'intérieur de laquelle circule un flux d'air primaire (FP) et qui comporte, à une extrémité externe, des chevrons (4),
**caractérisée par**
- une peau externe (3) entourant au moins partiellement la peau interne et le long de laquelle s'écoule un flux d'air secondaire (FS), la peau externe (3) étant mobile le long de la peau interne.

2. - Tuyère de turboréacteur selon la revendication 1, **caractérisée en ce qu'**elle comporte un dispositif de coulissement (5) entre la peau interne et la peau externe.

3. - Tuyère de turboréacteur selon la revendication 2, **caractérisée en ce que** le dispositif de coulissement (5) est entraîné par au moins un vérin (8).

4. - Tuyère de turboréacteur selon l'une quelconque des revendications 2 et 3, **caractérisée en ce que** le dispositif de coulissement (5) comporte des rails de guidage (6).

5. - Tuyère de turboréacteur selon l'une quelconque des revendications 2 à 4, **caractérisée en ce que** le dispositif de coulissement (5) comporte des galets de guidage (7).

6. - Tuyère de turboréacteur selon la revendication 3, **caractérisée en ce que** le vérin (8) est commandé par flux d'air.

7. - Tuyère de turboréacteur selon l'une quelconque des revendications 1 à 6, **caractérisée en ce que** les chevrons (4) de la peau interne (2) ont une forme en zigzags.

8. - Tuyère de turboréacteur selon la revendication 7, **caractérisée en ce que** les zigzags sont constitués par une succession de V ou de U.

9. - Aéronef comportant un turboréacteur à double flux d'air séparés, **caractérisé en ce que** ledit turboréacteur comporte une tuyère selon l'une quelconque des revendications 1 à 8.

## Claims

1. - Primary exhaust nozzle (1) for a turbofan engine of the double, separated air-flow type for aircraft comprising:
- an inner coat (2) within which there circulates a primary air flow (FP) and which comprises chevrons (4) at an external end,
**characterized by**:
- an outer coat (3) at least partially surrounding the inner coat and along which there flows a secondary air flow (FS), the outer coat (3) being mobile along the inner coat.

2. - Exhaust nozzle for turbofan engine according to claim 1, **characterized in that** it comprises a sliding device (5) between the inner coat and the outer coat.

3. - Exhaust nozzle for turbofan engine according to claim 2, **characterized in that** the sliding device (5) is driven by at least one thruster (8),

4. - Exhaust nozzle for turbofan engine according to one of the claims 2 and 3, **characterized in that** the sliding device (5) has guide rails (6),

5. - Exhaust nozzle for turbofan engine according to one of the claims 2 to 4, **characterized in that** the sliding device (5) has guide rollers (7),

6. - Exhaust nozzle for turbofan engine according to claim 3, **characterized in that** the thruster (8) is controlled by air flow.

7. - Exhaust nozzle for turbofan engine according to any of the claims 1 to 6, **characterized in that** the chevrons (4) of the inner coat (2) have a zigzag shape,

8. - Exhaust nozzle for turbofan engine according to claim 7, **characterized in that** the zigzags are constituted by a succession of Vs or Us.

9. - An aircraft comprising a turbofan engine with double separated air-flows, **characterized in that** said turbofan engine has an exhaust nozzle according to any of the claims 1 to 8.

## Patentansprüche

1. - Düse (1) eines Turbostrahltriebwerks für ein Luftfahrzeug mit zwei getrennten Luftströmen, mit:
- einer Innenhaut (2), innerhalb derer eine Hauptströmung (HS) geführt wird, und die an einem äußeren Ende Leisten (4) enthält,
**gekennzeichnet durch** eine Außenhaut (3), die zumindest teilweise die Innenhaut ummantelt, und entlang derer die Zusatzströmung (ZS) abgeführt wird,
die Außenhaut (3) ist dabei entlang der Innenhaut beweglich.

2. - Düse des Turbostrahltriebwerks nach Anspruch 1, die **dadurch gekennzeichnet ist, dass** sie eine Gleitvorrichtung (5) zwischen der Innenhaut und der Außenhaut enthält.

3. - Düse des Turbostrahltriebwerks nach Anspruch 2, die **dadurch gekennzeichnet ist, dass** die Gleitvorrichtung (5) durch zumindest einen Zylinder (8) angetrieben wird.

4. - Düse des Turbostrahltriebwerks nach irgendeinem der Ansprüche 2 und 3, die **dadurch gekennzeichnet ist, dass** die Gleitvorrichtung (5) Führungsschienen (6) enthält.

5. - Düse des Turbostrahltriebwerks nach irgendeinem der Ansprüche 2 bis 4, die **dadurch gekennzeichnet ist, dass** die Gleitvorrichtung (5) Führungskugelrollen (7) enthält

6. - Düse des Turbostrahltriebwerks nach Anspruch 3, die **dadurch gekennzeichnet ist, dass** der Zylinder (8) durch einen Luftstrom angesteuert wird.

7. - Düse des Turbostrahltriebwerks nach irgendeinem der Ansprüche 1 bis 6, die **dadurch gekennzeichnet ist, dass** die Leisten (4) der Innenhaut (2) eine Zickzackform aufweisen.

8. - Düse des Turbostrahltriebwerks nach Anspruch 7, die **dadurch gekennzeichnet ist, dass** die Zickzackform aus einer Reihe von aufeinander folgenden V oder U besteht.

9. - Luftfahrzeug bestehend aus einem Turbostrahltriebwerk mit zwei getrennten Luftströmen, das **dadurch gekennzeichnet ist, dass** das besagte Turbostrahltriebwerk über eine Düse nach irgendeinem der Ansprüche 1 bis 8 verfügt.
